# EUROPÄISCHE PATENTSCHRIFT

(11) **EP 1 009 580 B1**
(45) Veröffentlichungstag und Bekanntmachung des Hinweises auf die Patenterteilung: **23.05.2001**
(21) Anmeldenummer: 98906893.7
(22) Anmeldetag: 27.01.1998
(51) Int. Cl.: B23K 26/08, C21D 1/00, F02F 1/00

(54) **VERFAHREN UND EINE VORRICHTUNG ZUM BEHANDELN DER FLÄCHEN VON BOHRUNGEN VON BAUTEILEN**
METHOD AND DEVICE FOR TREATING THE SURFACES OF COMPONENT BORES
PROCEDE ET DISPOSITIF DESTINE A TRAITER LES SURFACES D'ORIFICES PRATIQUES DANS DES ELEMENTS

(30) Priorität: 18.03.1997 DE 19711232
(43) Veröffentlichungstag der Anmeldung: 21.06.2000
(73) Patentinhaber: ELOTHERM GmbH, D-42855 Remscheid (DE)
(72) Erfinder: STENGEL, Edgar, D-42855 Remscheid (DE)
(74) Vertreter: Cohausz & Florack
(86) Internationale Anmeldenummer: EP9800436
(87) Internationale Veröffentlichungsnummer: WO9841356

(56) Entgegenhaltungen:
- US-A- 4 017 708
- PATENT ABSTRACTS OF JAPAN vol. 005, no. 054 (C-050), 15.April 1981 & JP 56 005923 A (KOMATSU LTD), 22.Januar 1981, in der Anmeldung erwähnt

## Beschreibung

Die Erfindung betrifft ein Verfahren und eine Vorrichtung zum Behandeln der Flächen von Bohrungen von Bauteilen, insbesondere zum Behandeln der Laufbahnen von Zylinderbohrungen von Motorblöcken, mittels eines Laserstrahls, der über eine Umlenkoptik auf die zu behandelnde Fläche gelenkt wird.

Zur Oberflächenbehandlung hochbelasteter Flächen von Bohrungen, insbesondere zur Behandlung der Laufflächen der Zylinderbohrungen von Verbrennungsmotoren, werden Vorrichtungen eingesetzt, die mittels eines Laserstrahls von hoher Energiedichte die zu behandelnde Laufbahn erwärmen. Der Laserstrahl fällt dabei koaxial zu der mit der Bohrungslängsachse zusammenfallenden Drehachse einer Umlenkoptik in die Bohrung ein. In der Umlenkoptik wird der Laserstrahl mittels eines rotierenden Spiegels umgelenkt und gegen die zu behandelnde Fläche projiziert.

Bei den bekannten Bearbeitungsstationen läßt sich die Umlenkoptik aufgrund ihrer geringen Größe und ihres geringen Gewichts problemlos mit hohen Umdrehungszahlen drehen. In Abhängigkeit von der absolvierten Anzahl von Umdrehungen wird die Umlenkoptik während der Bearbeitung über geeignete Linearantriebe immer tiefer in die Bohrung eingeführt bis die Bearbeitung abgeschlossen ist. Danach wird die Umlenkoptik aus der Bohrung gefahren und über einen weiteren Linearantrieb zu der anschließend zu bearbeitenden Bohrung bewegt.

Der Vorteil der bekannten Bearbeitungsstation besteht in dem geringen Gewicht der Umlenkoptik. Dies ermöglicht es zum einen, bei der Behandlung der Bohrungsflächen nur geringe Massen zu bewegen. Dementsprechend müssen während der Bearbeitung der Flächen nur gering Fliehkräfte bewältigt werden. Die hohe Umdrehungszahl der Umlenkoptik ermöglicht darüber hinaus eine wirkungsvolle, gleichmäßige Behandlung der zu bearbeitenden Bohrungsflächen. Zum anderen ermöglicht das geringe Gewicht auch die mit geringem Kraftaufwand einfach durchführbare Zustellung der Umlenkoptik zu der als nächste zu bearbeitenden Bohrung. Aufgrund dieser beiden Vorteile der bekannten Bearbeitungsstationen können diese mit geringem apparativen Aufwand und damit einhergehend mit verminderten Kosten hergestellt werden.

Im praktischen Einsatz zeigt sich jedoch, daß die bekannten Bearbeitungsstationen nur mit einem geringen Wirkungsgrad betrieben werden können. Aufgrund der beengten Gegebenheiten und der Notwendigkeit der Anordnung des Umlenkspiegels der Umlenkoptik in deren Drehachse gelangt nur ein Bruchteil des Laserstrahls zu der zu behandelnden Fläche.

Neben dem voranstehend erläuterten, aus der Praxis bekannten Stand der Technik ist aus US-A-4017708 sowie aus Patent Abstracts of Japan, C-50, 1981, Vol. 5, No. 54, JP 56-5923 A, eine Vorrichtung bekannt, bei der zur Wärmebehandlung der Fläche von Bohrungen von zylindrischen Bauteilen mittels eines Laserstrahls, welcher über eine Umlenkoptik auf die zu behandelnde Fläche gelenkt wird, das zylindrische Bauteil während der Behandlung bei stillstehender Umlenkoptik um eine achsparallel zur Längsachse der bearbeiteten Bohrung ausgerichtete Drehachse gedreht wird.

Die Aufgabe der Erfindung besteht darin, ein Verfahren und eine Vorrichtung zu schaffen, die bei geringem Aufwand eine Bearbeitung der Flächen von Bauteilbohrungen mit erhöhter Präzision und verbessertem Wirkungsgrad ermöglichen.

Diese Aufgabe wird hinsichtlich eines Verfahrens gemäß dem Oberbegriff des Anspruchs 1 dadurch gelöst, daß bei einer Umdrehung des Bauteils auftretende Unwuchten durch Ausgleichsmassen ausgeglichen werden. Vorzugsweise sollte die Drehachse des Bauteils mit der Längsachse der zu behandelnden Bohrung zusammenfallen.

Die Aufgabe wird auch durch eine Vorrichtung zum Behandeln der Flächen von Bohrungen von Bauteilen mittels eines Laserstrahls, insbesondere zum Behandeln der Laufbahnen von Zylinderbohrungen von Motorblöcken, mit einer in die zu bearbeitende Bohrung einführbaren Umlenkoptik zum Umlenken des Laserstrahls auf die zu behandelnde Fläche, mit einem Drehantrieb zum Drehen des Bauteils um eine achsparallel zur Längsachse der jeweils bearbeiteten Bohrung und innerhalb der Bohrungsöffnung angeordnete Drehachse und mit mindestens einer Ausgleichsmasse, die zum Ausgleich der bei einem Umlauf des Bauteils auftretenden Unwuchten mit dem Drehantrieb verkoppelbar sind, gelöst.

Erfindungsgemäß wird vorgeschlagen, die durch die Drehung des Bauteils verursachten Unwuchten mittels geeignet angeordneter Ausgleichsmassen auszugleichen. Auf diese Weise ist trotz der erheblichen, bei der Rotation des Bauteils auftretenden Fliehkräfte ein ruhiges, störungsfreies Umlaufen des Bauteils während der Bearbeitung gewährleistet.

Trotz des bei einer erfindungsgemäßen Vorrichtung für den Antrieb des Bauteils erforderlichen Aufwands, trotz der insbesondere bei der Bearbeitung größerer, schwererer Bauteile, wie Motorblocken, notwendigen hohen Antriebskräften und trotz der erheblichen Fliehkräfte, die bei der Rotation von schweren Bauteilen auszugleichen sind, wird überraschender Weise ein gegenüber der herkömmlichen Bearbeitungsmethode erheblich verbessertes Arbeitsergebnis erzielt. Dies ist dadurch möglich, daß die während der Bearbeitung stillstehende Umlenkoptik von der Drehbewegung des Bauteils schwingungsentkoppelt ist, so daß der Laserstrahl unbeinflußt von Gehäuseschwingungen mit hoher Präzision auf die zu behandelnde Fläche projizierbar ist.

Die Präzision der Abbildung des Laserstrahls auf der zu behandelnden Fläche läßt sich dadurch zusätzlich verbessern, daß das Zentrum des in die Bohrung einfallenden Laserstrahls beabstandet zur Längsachse der Bohrung angeordnet ist. Auf diese Weise ist es möglich, den Umlenkspiegel der Umlenkoptik mit größerem Abstand zu der zu behandelnden Fläche anzuordnen. Durch die damit einhergehende Vergrößerung der Brennweite wird eine Verbesserung der Abbildungsgenauigkeit des Laserstrahls erreicht.

Insbesondere bei der Bearbeitung von Bauteilen mit einer komplexen Form ist es günstig, wenn eine Steuereinrichtung vorgesehen ist, die in Abhängigkeit von bei einer Umdrehung des Bauteils auftretenden Unwuchten Steuersignale an Stelleinrichtungen zum Ändern der Lage und/oder des Gewichts der Ausgleichsmasse abgibt. Mit einer solchen Steuereinrichtung lassen sich bei einem Umlauf des Bauteils auftretende Unwuchten automatisch ausgleichen.

Kostengünstig läßt sich der Ausgleich der Unwuchten auch dadurch bewerkstelligen, daß erzwungen durch eine mechanische Verkopplung mit einer Veränderung der Lage des Bauteils eine entsprechende Veränderung der Lage der Ausgleichsmasse zum Ausgleich der durch die Lageänderung des Bauteils hervorgerufenen Unwucht einhergeht. Bei einer derart ausgestalteten erfindungsgemäßen Vorrichtung ist sichergestellt, daß mit jeder eine Unwucht verursachenden Lageänderung des Bauteils eine entsprechende, die Unwucht ausgleichende Lageänderung der Ausgleichsmasse bewirkt wird. Eine derartige mechanische Verkopplung der Bewegung kann auf einfache Weise dadurch erreicht werden, daß das Bauteil auf einem entlang einer ersten linearen Bewegungsbahn bewegbaren ersten Schlitten befestigbar ist, daß die Ausgleichsmasse entlang einer achsparallel zu der ersten Bewegungsbahn ausgerichteten zweiten Bewegungsbahn bewegbar ist und daß die Bewegung des ersten Schlittens über ein Zahnstangengetriebe mit der Bewegung der Ausgleichsmasse verkoppelt ist. Diese Ausgestaltung der Erfindung ist insbesondere dann vorteilhaft, wenn die zu behandelnden Bohrungen, wie beispielsweise die Zylinderbohrungen eines Motorblocks, in Reihe angeordnet sind. Gunstig ist es in diesem Zusammenhang auch, wenn mindestens zwei Ausgleichsmassen vorhanden sind, wobei jeweils eine Bewegungsbahn für eine der Ausgleichsmassen im Bereich der einen Seite des Schlittens und die Bewegungsbahn der anderen Ausgleichsmasse an der gegenüberliegenden Seite des Schlittens angeordnet ist. Auf diese Weise lassen sich mehrere Ausgleichsmassen von geringen Abmessungen und geringem Einzelgewicht an der erfindungsgemäßen Vorrichtung raumsparend anbringen.

Eine praxisgerechte, mit hoher Präzision arbeitende Ausführung einer erfindungsgemäßen Vorrichtung ist dadurch gekennzeichnet, daß der das Bauteil tragende Schlitten auf einem von einem durch einen Hauptdrehantrieb angetriebenen Drehtisch angeordnet ist, daß der Schlitten über ein die Drehbewegung einer mit dem Hauptdrehantrieb verkoppelten Antriebswelle in eine lineare Bewegung des Schlittens umsetzendes Getriebe mit dieser Antriebswelle verkoppelt ist und daß ein Zwischengetriebe vorhanden ist, über welches durch Einleiten einer zusätzlichen Drehantriebsbewegung eine Drehzahldifferenz zwischen dem Drehtisch und der Antriebswelle erzeugbar ist. Eine derart ausgestaltete Vorrichtung ermöglicht das Verstellen des das Bauteil tragenden Schlittens entlang einer linearen Bewegungsbahn bei rotierendem Bauteil. Eine Unterbrechung der Rotation zum Umpositionieren des Bauteils nach Beendigung der Bearbeitung einer Bohrung ist nicht erforderlich, so daß keine Bearbeitungszeit für ein Abbremsen und Wiederanfahren des Drehtischs verloren geht.

Günstig ist es, wenn die Umlenkoptik ein in die Bohrung einfuhrbares Gehäuse aufweist, in welches der Laserstrahl versetzt gegenüber der Längsachse einfällt, und einen in dem Gehäuse im Einfallweg des Laserstrahls angeordneten Umlenkspiegel aufweist, der der. Laserstrahl zu einer in die Mantelfläche des Gehäuses eingeformten Austrittsöffnung umleitet. Eine derartige Ausgestaltung der Umlenkoptik ermöglicht die präzise Abbildung des Laserstrahls auf der zu behandelnden Flache bei einer maximal großen Brennweite.

Ein wesentlicher Vorteil der Erfindung besteht darin, daß es aufgrund der gegenüber der Längsachse der zu bearbeitenden Bohrung versetzten Positionierung des Laserstrahls auf einfache Weise möglich ist, einen ausreichenden Raum im Bereich der Umlenkoptik fur ein Absaugen bei der Behandlung der Flächen der Bohrung entstehender Gase zur Verfügung zu stellen. Auf diese Weise kann ein Verschmutzen der Umlenkoptik und eine Beeintrachtigung des Behandlungsergebnisses durch sich niederschlagende, zuvor abgetragene Partikel verhindert werden.

Nachfolgend wird die Erfindung anhand einer ein Ausführungsbeispiel darstellenden Zeichnung näher erläutert. Es zeigen in schematischer Darstellung:
- Fig. 1: eine Vorrichtung zum Behandeln der Laufflächen von Zylinderbohrungen eines Motorblocks in seitlicher Ansicht;
- Fig. 2: die Vorrichtung nach Fig. 1 in einer Ansicht von oben;
- Fig. 3: die Vorrichtung nach den Figuren 1 und 2 in einer frontalen, teilgeschnittenen Ansicht;
- Fig. 4: eine in eine Bohrung eingesenkte, zum Einsatz in der Vorrichtung nach den Figuren 1 bis 3 bestimmte Umlenkoptik in einem ausschnittweisen Längsschnitt;
- Fig. 5: die in Fig. 4 gezeigte Umlenkoptik in einer Ansicht von oben.

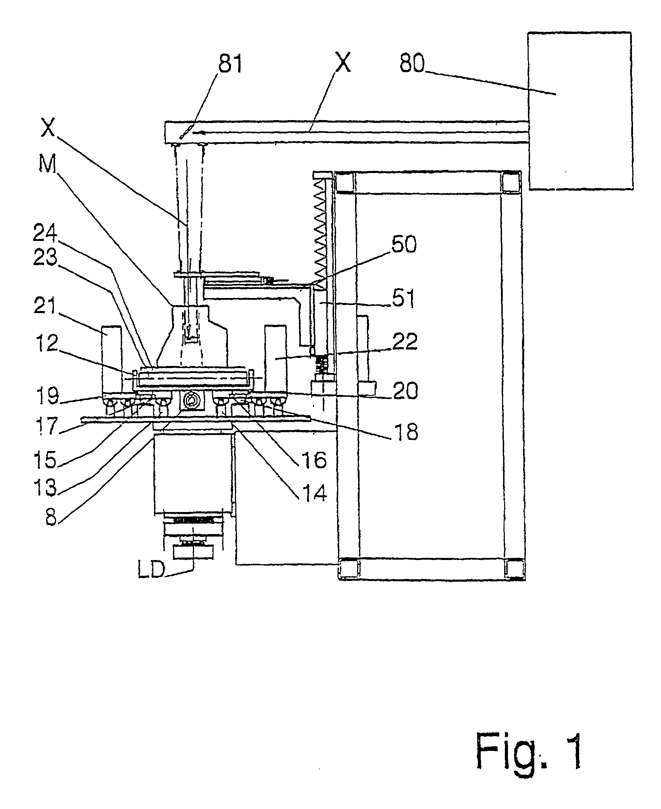

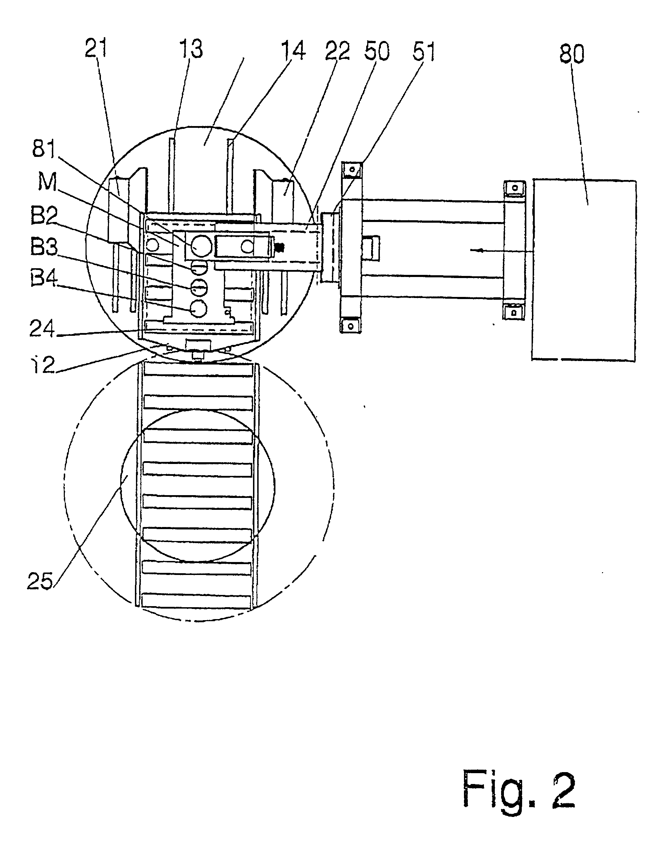

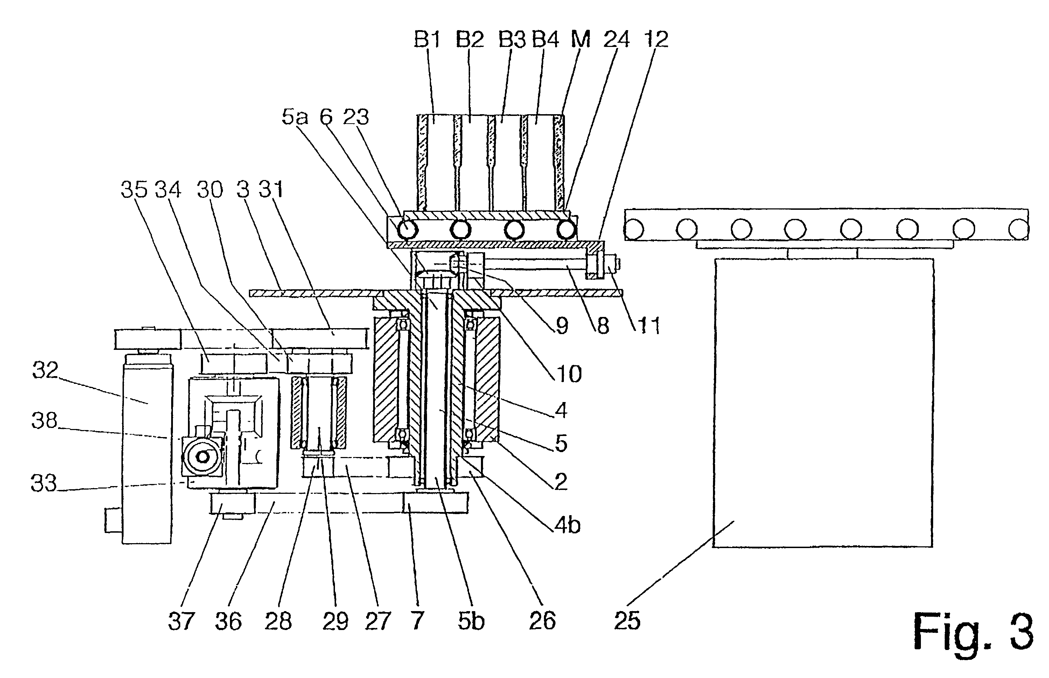

Die in den Figuren 1 bis 3 gezeigte Vorrichtung 1 weist ein Gestell 2 auf, in dem eine einen Drehtisch 3 tragende Hohlwelle 4 gelagert ist. In der Durchgangsöffnung der Hohlwelle 4 ist eine Antriebswelle 5 gelagert, deren Wellenenden 5a,b über das obere, dem Drehtisch 3 zugeordnete Ende der Hohlwelle 4 bzw. das untere Wellenende 4b der Hohlwelle 4 hinausragt. An ihrem oberen Wellenende 5a tragt die Antriebswelle 5 ein Kegelrad 6, während an ihrer unteres Ende 5b eine Riemenscheibe 7 befestigt ist.

Mit dem von der Antriebswelle 5 getragenen Kegelrad 6 steht ein mit einer rechtwinklig zur Antriebswelle 5 ausgerichteten Gewindespindel 8 verbundenes Kegelrad 9 in Eingriff. Die Gewindespindel 8 ist mit ihrem der Antriebswelle 5 zugeordneten Endabschnitt in einem von dem Drehtisch 3 getragenen Lager 10 gelagert. Mit ihr ist über ein Gewindestück 11 ein Schlitten 12 verkoppelt.

Der Schlitten 12 ist verschiebbar auf geradlinig ausgebildeten, beabstandet parallel zueinander auf dem Drehtisch 3 befestigten Fuhrungsschienen 13,14 gelagert. Den Führungsschienen 13,14 zugeordnet ist auf der Unterseite des Schlittens 12 jeweils eine Zahnstange 15,16 ausgebildet, deren Zahnung zum jeweils nachstbenachbarten Rand des Schlittens 12 gerichtet ist. Mit den Zahnstangen 15,16 steht jeweils ein auf dem Drehtisch 3 gelagertes Zahnrad 17,18 in Eingriff. Zusätzlich steht mit den Zahnrädern 17,18 jeweils eine Zahnstange in Eingriff, die an dem seitlichen, jeweils dem Schlitten 12 zugeordneten Rand von jeweils einem weiteren parallel zu dem Schlitten 12 angeordneten Schlitten 19,20 ausgebildet ist. Jeder der Schlitten 19,20 trägt eine Ausgleichsmasse 21,22, deren Gewicht jeweils der Hälfte des Gewichts eines von dem Schlitten 12 getragenen Motors M entspricht. Uber die Zahnstangen 15,16, die Zahnräder 17,18 und die Zahnstangen der Schlitten 19,20 bewirkt jede Verschiebung des Schlittens 12 in eine Richtung eine entsprechende Verstellung der Schlitten 19,20 in die entgegengesetzte Richtung.

Der Schlitten 12 weist auf seiner Oberseite achsparallel zueinander angeordnete Rollen 23 auf, über die eine den Motorblock M tragende Transportpalette 24 auf den Schlitten 12 mittels einer Be- und Entladeeinrichtung 25 schiebbar ist. In der in den Figuren dargestellten Stellung ist der Motorblock M gemeinsam mit der Transportpalette 24 fest auf dem Schlitten 12 befestigt.

Auch am unteren Ende der Hohlwelle 2 ist eine Riemenscheibe 26 befestigt. Auf dieser ist ein Riemen 27 aufgelegt. Über den Riemen 27 ist die Hohlwelle 4 mit einer Riemenscheibe 28 verbunden, die am unteren Wellenende einer in dem Gestell 2 gelagerten Zwischenwelle 29 befestigt ist. Die Zwischenwelle 29 trägt an ihren oberen Wellenende zwei Riemenscheiben 30,31. Über die obere Riemenscheibe 31 ist die Zwischenwelle 29 an einen Hauptantrieb 32 angeschlossen.

Über die andere Riemenscheibe 30 ist mittels eines Riemens 34 eine an einer Eingangswelle eines Zwischengetriebes 33 befestige Riemenscheibe 35 an die Zwischenwelle 29 angeschlossen. Ein Riemen 36 verbindet eine von einer Ausgangswelle des Zwischengetriebes 33 getragene Riemenscheibe 37 mit der Riemenscheibe 7 der Antriebswelle 5, so daß die Antriebswelle 5 über das Zwischengetriebe 33 und die Zwischenwelle 29 mit dem Hauptantrieb 32 verbunden ist.

Mittels eines an dem Zwischengetriebe 33 angreifenden Zusatzantriebsmotors 38 kann eine zusatzliche Drehbewegung in den durch den Riemen 35, die Riemenscheibe 34, den Zwischenantrieb 33, die Riemenscheibe 37 und den Riemen 36 gebildeten Antriebsstrang für die Antriebswelle 5 eingeleitet werden. Diese Drehbewegung kann sowohl eine der Drehrichtung des Drehtischs 3 entsprechende Drehrichtung aufweisen, als auch eine, die gegen diese Drehrichtung gerichtet ist.

Die Durchmesser der Riemenscheiben 7,26,28,30,31,34,36 sind derart aufeinander abgestimmt, daß die Drehzahl der Antriebswelle 5 bei stillstehendem Zusatzantriebsmotor 38 mit der gleichen Drehzahl rotiert wie der von der Hohlwelle 4 getragene Drehtisch 3. Wird von dem Zusatzantriebsmotor 38 eine in Drehrichtung des Drehtischs gerichtete Drehbewegung in den Antriebsstrang für die Antriebswelle 5 eingeleitet, dreht sich diese schneller als der Drehtisch 3. Dies hat zur Folge, daß sich die Gewindespindel 8 mit einer der Drehzahldifferenz zwischen Drehtisch 3 und Antriebswelle 5 entsprechenden Drehzahl zu drehen beginnt. Auf diese Weise wird der Schlitten 12 entlang der Führungsschienen 13,14 auf einer linear ausgerichteten Bewegungsbahn bewegt. Wird dagegen über den Zwischenantrieb 33 eine der Drehrichtung des Drehtischs 3 entgegengesetzte Drehbewegung in den Antriebsstrang für die Antriebswelle 5 eingeleitet, dreht sich diese entsprechend langsamer als der Drehtisch 3, so daß sich die Gewindespindel 8 in ihre andere Drehrichtung zu drehen beginnt. Dementsprechend wird der Schlitten 12 entgegengesetzt zu der zuvor beschriebenen Bewegungsrichtung bewegt.

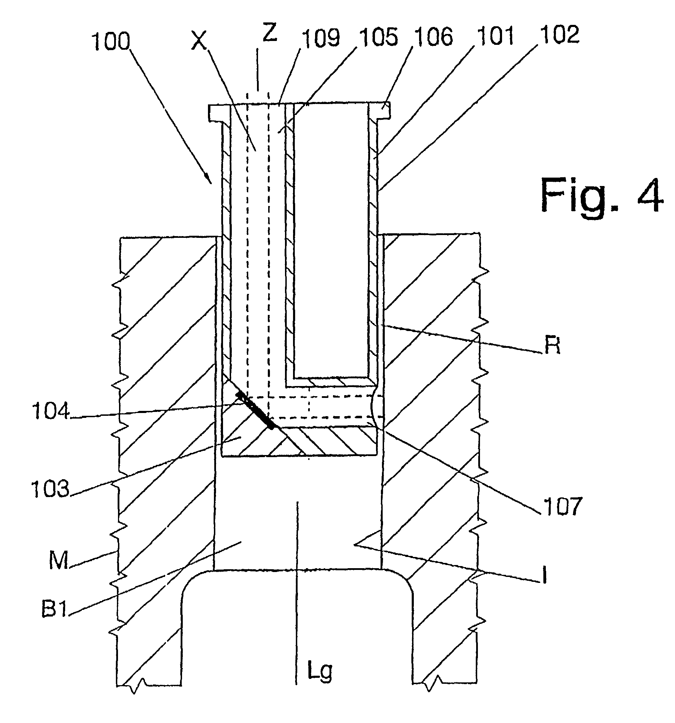

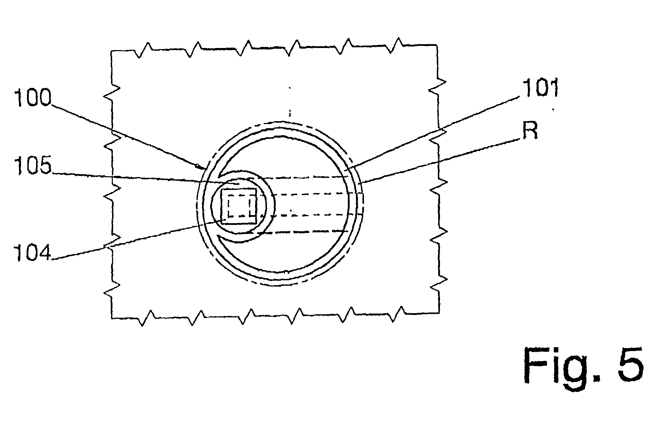

Die in den Figuren 4 und 5 gezeigte Umlenkoptik 100 weist ein zylindrisches, topfförmiges Gehause 101 auf. Der Durchmesser des Gehauses ist kleiner als der Durchmesser der zu bearbeitenden Bohrungen B1,B2,B3,B4 des Motorblocks M entspricht. Daher ist bei koaxial zur Bohrung B1 in diese eingefuhrter Umlenkoptik 100 zwischen der Innenfläche I und der Mantelfläche 102 des Gehäuses 101 ein Ringspalt R ausgebildet.

Die Umlenkoptik 100 ist am freien Ende eines Galgens 50 einer in vertikaler Richtung arbeitenden Stelleinrichtung 51 befestigt, dessen Länge derart bemessen ist, daß die Längsachse Lg der Umlenkoptik 100 koaxial zur Drehachse LD des Drehtischs 3 ausgerichtet ist.

Das Gehäuse 101 weist im Bereich des Übergangs zwischen seiner Mantelfläche 102 und seines Bodens eine Ausnehmung auf, in die ein im Querschnitt prismatisch geformter Spiegeleinsatz 103 eingefügt ist. Die dem Innern des Gehäuses 101 zugeordnete Spiegelfläche 104 des Spiegeleinsatzes 103 ist in einem Winkel von 45° zur Längsachse Lg des Gehäuses 101 ausgerichtet, wobei der Mittelpunkt der Spiegelfläche 104 um ein Viertel des Gehausedurchmessers versetzt gegenüber der Längsachse Lg angeordnet ist.

Innerhalb des Gehäuses 101 ist ein Kanal 105 ausgebildet, dessen Durchmesser größer ist als der Durchmesser der Spiegelfläche 104 und der konzentrisch und oberhalb von diesem angeordnet ist. Der Kanal 105 mündet mit seiner Eintrittsöffnung 109 am oberen Rand 106 des Gehauses 101.

In die Mantelfläche 102 des Gehäuses 101 ist eine Offnung 107 eingeformt. Die Öffnung 107 ist konzentrisch zu einer gedachten Geraden angeordnet, die in einer normal zur Längsachse Lg ausgerichteten und den Mittelpunkt der Spiegelfläche schneidenden Ebene angeordnet ist und die von oben betrachtet rechtwinklig auf die Spiegelfläche 104 trifft.

Zum Behandeln der Innenfläche I einer der in einer Reihe hintereinander angeordneten Bohrungen B1,B2,B3,B4 des Motors M wird die Umlenkoptik 100 bei rotierendem Drehtisch 3 und mit dem Drehtisch 3 rotierendem Motor M mittels der Stelleinrichtung 51 in die zu bearbeitende Bohrung B1 bis an den Anfang des zu behandelnden Abschnitts der Innenflache I abgesenkt. Anschließend wird eine Einrichtung 80 zum Erzeugen eines Laserstrahls X eingeschaltet. Der zunächst rechtwinklig zur Längsachse Lg des Gehäuses 101 ausgerichtete Laserstrahl X wird über einen geeigneten Umlenkspiegel 81 derart umgelenkt, daß er als achsparallel zur Längsachse Lg der Umlenkoptik 100 ausgerichteter, aber mit Abstand zu dieser verlaufender Strahl in das Gehäuse 101 gelangt. Dabei ist sein Zentrum Z konzentrisch zur Mündung des Kanals 105 der Umlenkoptik 100 ausgerichtet. Der durch den Kanal 105 in das Gehäuse der Umlenkoptik 100 gelangende Laserstrahl X fällt auf die Spiegelfläche 104 und wird an dieser im rechten Winkel zur Öffnung 107 des Gehäuses 101 umgelenkt. Über die Öffnung 107 verläßt der Laserstrahl X die Umlenkoptik 100 und trifft auf die zu behandelnde, rotierende Innenfläche I.

Die durch den Laserstrahl X bewirkte Erwärmung der Innenfläche I führt zu einer Verdampfung von auf der Innenfläche haftenden Partikeln. Die dabei entstehenden Gase werden über den zwischen dem Gehäuse 101 der Umlenkoptik 100 und der Innenflache I der Bohrung B1 gebildeten Ringspalt R abgesaugt, wobei zusätzlich auch die Querschnitte zur Verfügung stehen, die nicht von dem Kanal 105 mit seiner Wandung ausgefüllt werden.

In Abhängigkeit von dem Bearbeitungsfortschritt wird die Umlenkoptik 100 in die Bohrung B1 eingesenkt, bis das Ende des zu bearbeitenden Abschnitts der Innenfläche I erreicht wird. Nun wird die Umlenkoptik 100 aus der Bohrung B1 gefahren. Bei nach wie vor drehendem Drehtisch 3 wird in der voranstehend beschriebenen Weise anschließend der Schlitten 12 durch Einleiten einer zusatzlichen Antriebsbewegung in den Antriebsstrang für die Antriebswelle 5 linear verschoben, bis die Langsachse der als nächste zu bearbeitenden Bohrung B2 koaxial zur Langsachse Lg der Umlenkoptik 100 ausgerichtet ist. Aufgrund der durch die Zahnstangen 15,16, die Zahnräder 17,18 und die Zahnstangen der Schlitten 19,20 bewirkten Verkopplung der Bewegung des den Motor M tragenden Schlittens 12 mit den die Ausgleichsmassen 21,22 tragenden Schlitten 19,20 befinden sich diese dabei stets in einer Position, in der die Ausgleichsmassen 21,22 die durch den rotierenden Motor M hervorgerufene Unwucht ausgleichen.

## Patentansprüche

1. Verfahren zum Behandeln der Flächen (I) von Bohrungen von Bauteilen, insbesondere zum Behandeln der Laufbahnen (I) von Zylinderbohrungen (B1,B2,B3,B4) von Motorblöcken (M), mittels eines Laserstrahls (X), der über eine Umlenkoptik (100) auf die zu behandelnde Fläche (I) gelenkt wird, wobei das Bauteil (M) während des Behandlungsvorgangs bei stillstehender Umlenkoptik (100) um eine achsparallel zur Längsachse der bearbeiteten Bohrung ausgerichtete Drehachse gedreht wird **dadurch gekennzeichnet**, daß bei einer Umdrehung des Bauteils (M) auftretende Unwuchten durch Ausgleichsmassen (21,22) ausgeglichen werden.

2. Verfahren nach Anspruch 1, **dadurch gekennzeichnet, daß** die Drehachse des Bauteils (M) mit der Längsachse der zu behandelnden Bohrung (B1,B2,B3,B4) zusammenfällt.

3. Verfahren nach einem der voranstehenden Ansprüche,
**dadurch gekennzeichnet, daß** das Zentrum (Z) des in die Bohrung (B1,B2,B3,B4) einfallenden Laserstrahls (X) beabstandet zur Längsachse der Bohrung (B1,B2,B3,B4) angeordnet ist.

4. Vorrichtung zum Behandeln der Flächen von Bohrungen von Bauteilen (M) mittels eines Laserstrahls (X), insbesondere zum Behandeln der Laufbahnen (I) von Zylinderbohrungen (B1,B2,B3,B4) von Motorblöcken (M), mit einer in die zu bearbeitende Bohrung (B1,B2,B3,B4) einführbaren Umlenkoptik (100) zum Umlenken des Laserstrahls (X) auf die zu behandelnde Fläche (I), mit einem Drehantrieb (37) zum Drehen des Bauteils (M) um eine achsparallel zur Längsachse der jeweils bearbeiteten Bohrung (B1,B2,B3,B4) und innerhalb der Bohrungsöffnung angeordnete Drehachse (Lg) und mit mindestens einer Ausgleichsmasse (21,22), die zum Ausgleich der bei einem Umlauf des Bauteils (M) auftretenden Unwuchten mit dem Drehantrieb (37) verkoppelbar ist.

5. Vorrichtung nach Anspruch 4,
**gekennzeichnet durch** eine Steuereinrichtung, die in Abhängigkeit von bei einer Umdrehung des Bauteils (M) auftretenden Unwuchten Steuersignale an Stelleinrichtungen zum Ändern der Lage und/oder des Gewichts der Ausgleichsmasse (21,22) abgibt.

6. Vorrichtung nach Anspruch 4, **dadurch gekennzeichnet, daß** erzwungen durch eine mechanische Verkopplung mit einer Veränderung der Lage des Bauteils (M) eine entsprechende Veränderung der Lage der Ausgleichsmasse (21,22) zum Ausgleich der durch die Lageänderung des Bauteils (M) hervorgerufenen Unwucht einhergeht.

7. Vorrichtung nach Anspruch 6, **dadurch gekennzeichnet,** daß das Bauteil (M) auf einem entlang einer ersten linearen Bewegungsbahn bewegbaren ersten Schlitten (12) befestigbar ist, daß die Ausgleichsmasse (21,22) entlang einer achsparallel zu der ersten Bewegungsbahn ausgerichteten zweiten Bewegungsbahn bewegbar ist und daß die Bewegung des ersten Schlittens (12) über ein Zahnstangengetriebe mit der Bewegung der Ausgleichsmasse (21,22) verkoppelt ist.

8. Vorrichtung nach einem der Ansprüche 4 bis 7,
**dadurch gekennzeichnet, daß** mindestens zwei Ausgleichsmassen (21,22) vorhanden sind.

9. Vorrichtung nach Anspruch 8, **dadurch gekennzeichnet, daß** jeweils eine Bewegungsbahn für eine der Ausgleichsmassen (21,22) im Bereich der einen Seite des Schlittens (12) und die Bewegungsbahn der anderen Ausgleichsmasse (21,22) an der gegenüberliegenden Seite des Schlittens (12) angeordnet ist.

10. Vorrichtung nach einem der Ansprüche 7 bis 9, **dadurch gekennzeichnet, daß** der das Bauteil (M) tragende Schlitten (12) auf einem von einem durch einen Hauptdrehantrieb angetriebenen Drehtisch (3) angeordnet ist, daß der Schlitten (12) über ein die Drehbewegung einer mit dem Hauptdrehantrieb (37) verkoppelten Antriebswelle (5) in eine lineare Bewegung des Schlittens (12) umsetzendes Getriebe mit dieser Antriebswelle (5) verkoppelt ist und daß ein Zwischengetriebe (33) vorhanden ist, über welches durch Einleiten einer zusätzlichen Drehantriebsbewegung eine Drehzahldifferenz zwischen dem Drehtisch (3) und der Antriebswelle (5) erzeugbar ist.

11. Vorrichtung nach einem der Ansprüche 4 bis 10,
**dadurch gekennzeichnet, daß** die Drehachse des Bauteils (M) mit der Längsachse der zu bearbeitenden Bohrung (B1,B2,B3,B4) des Bauteils (M) übereinstimmt.

12. Vorrichtung nach Anspruch 11, **dadurch gekennzeichnet, daß** die Umlenkoptik (100) ein in die Bohrung (B1,B2,B3,B4) einführbares Gehäuse (101), in welches der Laserstrahl (X) versetzt gegenüber der Längsachse (Lg) einfällt, und einen in dem Gehäuse (101) im Einfallweg des Laserstrahls (X) angeordneten Umlenkspiegel (104) aufweist, der den Laserstrahl (X) zu einer in die Mantelfläche (102) des Gehäuses (101) eingeformten Austrittsöffnung (107) umleitet.

## Claims

1. A method for treating the surfaces (I) of bores in constructional components, more particularly for treating the slideways (I) of cylinder bores (B1, B2, B3, B4) of engine blocks (M) by means of a laser beam (X) which is guided via a deflecting optical system (100) on to the surface (I) to be treated, wherein during the treatment operation, with the deflecting optical system (100) stationary, the constructional component (M) is rotated around an axis of rotation directed axis-parallel with the longitudinal axis of the process bore, characterised in that imbalances occurring a rotation of the constructional component (M) are compensated by compensatory masses (21, 22).

2. A method according to claim 1, characterised in that the axis of rotation of the constructional component (M) coincides with the longitudinal axis of the bore (B1, B2, B3, B4) to be treated.

3. A process according to one of the preceding claims, characterised in that the centre (Z) of the laser beam (X) impinging in the bore (B1, B2, B3, B4) is disposed at a distance from the longitudinal axis of the bore (B1, B2, B3, B4).

4. An apparatus for treating the surfaces of bores of constructional components (M) by means of a laser beam (X), more particularly for treating the slideways (I) of cylinder bores (B1, B2, B3, B4) of motor blocks (M), having a deflecting optical system (100), which can be introduced into the bore (B1, B2, B3, B4) to be processed, for the deflection of the laser beam (X) on to the surface (I) to be treated, the apparatus also having a rotary drive (37) for rotating the constructional component (M) around an axis of rotation (Lg) disposed axis-parallel with the longitudinal axis of the particular bore (B1, B2, B3, B4) processed and disposed inside the bore opening, and at least one compensating mass (21, 22) which is coupled to the rotary drive (37) to compensate the imbalances occurring with a rotation of the constructional component (M).

5. An apparatus according to claim 4,
**characterised by** a control system which, in dependence on imbalances occurring with a rotation of the constructional component (M), delivers control signals to control devices for changing the position and/or the weight of the compensating mass (21, 22).

6. An apparatus according to claim 5,
**characterised in that** constrained by a mechanical coupling, a change in the position of the constructional component (M) is accompanied by a corresponding change in the position of the compensating mass (21, 22) for compensating the imbalance caused by the change in position of the constructional component (M).

7. An apparatus according to claim 6,
**characterised in that** the constructional component (M) can be attached to a first carriage (12) moveable along a first linear path of movement, the compensating mass (21, 22) can be moved along a second path of movement aligned axis-parallel with the first path of movement, and the movement of the first carriage (12) is coupled via a rack-and-pinion gear to the movement of the compensating mass (21, 22) .

8. An apparatus according to one of claims 4 to 7,
**characterised in that** at least two compensating masses (21, 22) are provided.

9. An apparatus according to claim 8,
**characterised in that** respectively a path of movement for one of the compensating masses (21, 22) is disposed in the zone of one side of the carriage (12), the path of movement of the other compensating mass (21, 22) being disposed on the opposite side of the carriage (12).

10. An apparatus according to one of claims 7 to 9,
**characterised in that** the carriage (12) bearing the constructional component (M) is disposed on a rotary table (3) driven by a main rotary drive, the carriage (12) is coupled to the driving shaft (5) via a transmission converting the rotary motion of the driving shaft (5) coupled to the main rotary drive (37) into a linear movement of the carriage (12), and an intermediate transmission (33) is provided via which a difference in speed between the rotary table (3) and the driving shaft (5) can be produced by the introduction of an additional rotary drive movement.

11. An apparatus according to one of claims 4 to 10,
**characterised in that** the axis of rotation of the constructional component (M) corresponds to the longitudinal axis of the bore (B1, B2, B3, B4) of the constructional component (M) which is to be processed.

12. An apparatus according to claim 11,
**characterised in that** the deflecting optical system (100) has a casing (101) which can be introduced into the bore (B1, B2, B3, B4) and into which the laser beam (X) offset in relation to the longitudinal axis (Lg) impinges, and a deflecting mirror (104) which is disposed in the casing (101) in the path of incidence of the laser beam (X) and which deflects the laser beam (X) to an outlet opening (107) formed in the generated surface (102) of the casing (101).

## Revendications

1. Procédé pour traiter les surfaces (I) d'alésages formés dans des composants, notamment pour traiter des surfaces de glissement (I) d'alésages (B1, B2, B3, B4) de cylindres de blocs-moteurs (M), à l'aide d'un faisceau laser (X), qui est dévié au moyen d'un dispositif optique de déviation (100) sur la surface (I) à traiter, selon lequel pendant le processus de traitement alors que le dispositif optique de déviation (100) est fixe, on fait tourner le composant (M) autour d'un axe de rotation orienté parallèlement à l'axe longitudinal de l'alésage à usiner, caractérisé en ce que des balourds, qui apparaissent lors d'une rotation du composant (M), sont compensés par des masses d'équilibrage (21, 22).

2. Procédé selon la revendication 1, caractérisé en ce que l'axe de rotation du composant (M) est confondu avec l'axe longitudinal de l'alésage à traiter (B1, B2, B3, B4).

3. Procédé selon l'une des revendications précédentes, caractérisé en ce que le centre (z) du faisceau laser (X), qui pénètre dans l'alésage (B1, B2, B3, B4), est situé à distance de l'axe longitudinal de l'alésage (B1, B2, B3, B4).

4. Dispositif pour traiter les surfaces d'alésage de composants (M) à l'aide d'un faisceau laser (X), notamment pour traiter les surfaces de glissement (I) d'alésages (B1, B2, B3, B4) de cylindres de blocs-moteurs (M), comportant un dispositif optique de déviation (100) pouvant être introduit dans l'alésage à usiner (B1, B2, B3, B4), pour dévier le faisceau laser (X) en direction de la surface (I) à traiter, un dispositif d'entraînement en rotation (37) pour faire tourner le composant (M) autour d'un axe de rotation (Lg), qui est parallèle à l'axe longitudinal de l'alésage respectivement usiné (B1, B2, B3, B4) et est situé à l'intérieur de l'ouverture de l'alésage, et au moins une masse d'équilibrage (21, 22), qui peut être accouplée au dispositif d'entraînement en rotation (37) pour compenser les balourds qui apparaissent lors d'une rotation du composant (M).

5. Dispositif selon la revendication 4, caractérisé par un dispositif de commande qui, en fonction de balourds apparaissant lors d'une rotation du composant (M), délivre des signaux de commande à des dispositifs de réglage pour modifier la position et/ou le poids de la masse d'équilibrage (21, 22).

6. Dispositif selon la revendication 4, caractérisé en ce que, d'une manière imposée par un couplage mécanique à un changement de la position du composant (M), une modification correspondante de la position de la masse d'équilibrage (21, 22) est réalisée pour compenser le balourd provoqué par le changement de position du composant (M).

7. Dispositif selon la revendication 6, caractérisé en ce que le composant (M) peut être fixé sur un premier chariot (12), qui est déplaçable le long d'une première trajectoire de déplacement linéaire, que la masse d'équilibrage (21, 22) est déplaçable 1e long d'une seconde trajectoire de déplacement orientée parallèlement à l'axe de la première trajectoire de déplacement, et que le déplacement du premier chariot (12) est couplé au déplacement de la masse d'équilibrage (21, 22), par l'intermédiaire d'un mécanisme à crémaillère.

8. Dispositif selon l'une des revendications 4 à 7, caractérisé en ce qu'au moins deux masses d'équilibrage (21, 22) sont prévues.

9. Dispositif selon la revendication 8, caractérisé en ce que respectivement une trajectoire de déplacement pour l'une des masses d'équilibrage (21, 22) est disposée au niveau d'un côté du chariot (12) et que la trajectoire de déplacement de l'autre masse d'équilibrage (21, 22) est disposée sur le côté opposé du chariot (12).

10. Dispositif selon l'une des revendications 7 à 9, caractérisé en ce que le chariot (12) portant le composant (M) est disposé sur un plateau rotatif (3), qui est entraîné par un dispositif principal d'entraînement en rotation, que le chariot (12) est couplé, par l'intermédiaire d'un mécanisme qui convertit le mouvement de rotation d'un arbre d'entraînement (5) couplé au dispositif principal d'entraînement en rotation (37), en un déplacement linéaire du chariot (12), à cet arbre d'entraînement (5) et qu'il est prévu un mécanisme intermédiaire (33), au moyen duquel une différence entre les vitesses de rotation du plateau rotatif (3) et de l'arbre d'entraînement (5) peut être produite par déclenchement d'un mouvement supplémentaire d'entraînement en rotation.

11. Dispositif selon l'une des revendications 4 à 10, caractérisé en ce que l'axe de rotation du composant (M) est confondu avec l'axe longitudinal de l'alésage à usiner (B1, B2, B3, B4) du composant (M).

12. Dispositif selon la revendication 11, caractérisé en ce que le dispositif optique de déviation (100) possède un boîtier (101), qui peut être introduit dans l'alésage (B1, B2, B3, B4) et dans lequel le faisceau laser (X) pénètre d'une manière décalée par rapport à l'axe longitudinal (Lg), et un miroir de déviation (104) qui est disposé dans le boîtier (101) sur le trajet d'incidence du faisceau laser (X) et dévie le faisceau laser (X) en direction d'une ouverture de sortie (107) aménagée dans la surface enveloppe (102) du boîtier (101).
